# EUROPEAN PATENT APPLICATION

(11) **EP 0 625 839 A1**
(43) Date of publication of application: **23.11.1994**
(21) Application number: 94303372.0
(22) Date of filing: 11.05.1994
(51) Int. Cl.: H04M 17/00

(54) **Smartcard telephone adjunct**

(30) Priority: 21.05.1993 US 65847
(71) Applicant: AT&T Corp., New York, NY 10013-2412 (US)
(72) Inventor: Mandelbaum, Richard, Manalapan, New Jersey 07726 (US); Wetherington, Diane R., Bernardsville, New Jersey 07924 (US)
(74) Representative: Buckley, Christopher Simon Thirsk

(57) **Abstract**

A telephone adjunct, or a telephone which incorporates the telephone adjunct, includes a smartcard reader (10) which provides users with enhanced capabilities. One basic concept disclosed is the ability of smartcards to interact with a service provider called by the user. A salient feature of the invention is that the user can interact with the service provider in the normal mode (e.g., through voice communication) and, at will, switch over to digital communication between the smartcard and the service provider. Normal mode operation can be reinstated upon termination of the digital communication by the smartcard. In one embodiment, the adjunct contains the smartcard reader (10) coupled to a modem and the modem is coupled to a network port (25) of the adjunct through a switch (22). The user's telephone is coupled to the network port of the adjunct through the same switch. This switch is under influence of a controller (23) that is sensitive to selected control signals, such as voice energy from the user's telephone, voice or carrier frequency from the network and carrier or data signals from the modem.

## Description

### Technical Field

This invention relates to smartcards and, more particularly, to smartcard readers in a communication environment.

### Background of the Invention

A smartcard is a card that contains a microprocessor, memory, input/output capability and a power system. Typical smartcards are credit-card sized and are compatible with the ISO credit card standards.

Smartcards come in different varieties but, primarily, they are distinguished by whether or not they contain accessible electrical contacts. However, regardless of whether the smartcard has contacts or is contactless, current art requires the use of smartcard readers. A smartcard reader contains apparatus and circuitry for supplying power to the circuitry within the smartcard and circuitry for communicating digital information to, and from, the smartcard.

Typically, smartcard readers are physically connected to, and intimately associated with, a service providing apparatus. One example is a computer. A user seeking access to the computer has the user's smartcard read by the smartcard reader and information derived from the smartcard is analyzed. The analysis is basically a security check. When the computer determines that the user is authorized, access is granted to the computer's resources. This is an illustration of smartcard use where the smartcard provides an identification.

Another application of smartcards is to provide a value, such as a dollar amount. The card is read by a smartcard reader that is coupled to a computing means in association with a service-providing device; and with each use the dollar amount associated with the card is decremented. This is akin to the magnetic mass transit ticket found, for example, in the Washington, D.C., subway system. A similar use is found in Europe where the smartcard reader is associated with a telephone, the value that is stored in the smartcard is "time" and the telephone apparatus includes means for measuring call durations and decrementing the amount of "time" left on the smartcard.

In none of the prior art applications is there a card reader that includes means for interacting with both a telephone and remote apparatus that is accessed via the telephone network.

### Summary of the Invention

Substantial benefits are attained for users of the telecommunications network through a telephone adjunct, or a telephone which incorporates the telephone adjunct, that includes a smartcard reader. One basic concept incorporated in this invention is the ability of smartcards to interact with a service provider called by the user. One salient feature of this invention is that the user can interact with the service provider in the normal mode (e.g., through voice communication) and then switch over to digital communication between the smartcard and the service provider. Normal mode operation can be reinstated upon termination of the digital communication by the smartcard.

In one embodiment, the adjunct contains the smartcard reader coupled to a modem and the modem is coupled to a network port of the adjunct through a switch. The user's telephone is coupled to the network port of the adjunct through the same switch. The switch is under influence of a controller that is sensitive to selected control signals, such as voice energy from the user's telephone, voice or carrier frequency from the network and carrier or data signals from the modem.

### Brief Description of the Drawing

FIG. 1 presents a block diagram of a telephone-smartcard reader adjunct;
FIG. 2 depicts the adjunct of FIG. 1 with an RF module connected thereto to create a wireless apparatus;
FIG. 3 presents another embodiment of a telephone-smartcard reader adjunct in accordance with the principles of this invention; and
FIG. 4 depicts an arrangement that connects the telephone and adjunct combination, through the telephone network to a service provider.

### Detailed Description

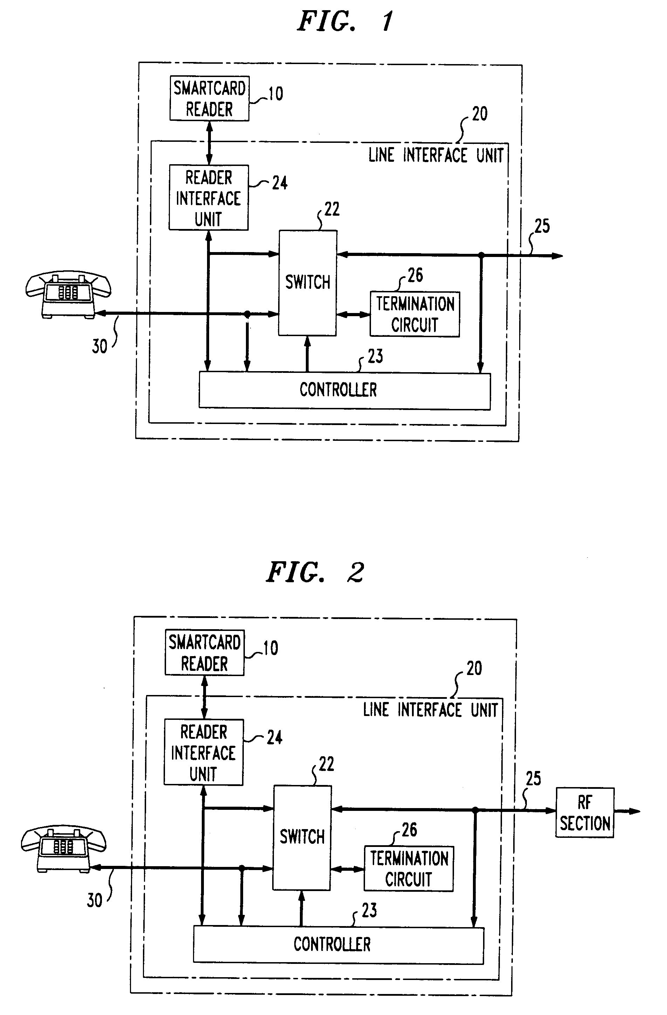

FIG. 1 describes one embodiment of an apparatus employing the principles of this invention. It comprises smartcard reader 10 and a line interface unit 20. Unit 20 is connected to smartcard reader 10 and to ports 25 and 30. Port 25 is adapted for connection to the telephone network, and port 30 is adapted for connection to a telephone instrument or the like (e.g., a modem).

Smartcard reader 10 is a conventional smartcard reader, not unlike the smartcard reader sold by AT&T under the name "AT&T Smartcard Reader - 5B". This device contains mechanical means for coupling a smartcard to the reader, and electronic circuitry. The latter includes circuitry for coupling power to the smartcard reader and circuitry for communicating digital information to and from the smartcard. The above-referenced reader also includes a microprocessor but, for purposes of this invention, the microprocessor is not required. It may be beneficial (though also not required) to purchase the AT&T smartcard reader hardware development kit.

The principles of this invention are applicable to both analog and digital environments of the telephone network. For illustrative purposes, the FIG. 1 apparatus is first described for a digital environment and then described for an analog environment. Thereafter, the description proceeds solely in the analog environment, but it is to be understood that a digital environment is within the contemplation of this invention.

For digital use, port 25 may be adapted to work in a digital telephone network such as the ISDN network, where signals may flow in frames of 128 bits that contain 16 control bits. In a typical application, port 30 would also be adapted to work digitally and the telephone instrument connected to port 30 would be one that is adapted to receive such 128 bit frames. Of course, that is not a requirement, since the FIG. 1 apparatus can contain a translating means for whatever telephone instrument is, in fact, connected to port 30. Such a translating means is not explicitly depicted in FIG. 1, but its electrical positioning is quite clear, i.e., interposed between ports 25 and 30. It is also quite clear that reader 10 must include means that can interact digitally in the 128-bit frame format. Such means, which is often called a "digital signal unit" merely buffers information and includes means for identifying the 16 control bits. Such units are well known in the art and do not, *per* *se,* form a part of this invention. The digital signal unit may be included within reader 10, as suggested above, but it can also be included in the line interface unit (20) itself.

When signals flowing between smartcard reader 10 and port 25 are strictly digital (i.e., dc levels that represent 1's and 0's, as contrasted to modulated analog signals that carry digital information), means must be provided to disallow port signals 25 from commingling and thereby interfering with the communication between reader 10 and port 25. Accordingly, in such a digital environment, line interface unit 20 must include at least a switch, such as switch 22, that establishes communication either between port 25 and reader 10 or between port 25 and port 30. The digital signal unit described above is embodied within reader interface unit 24 and is, thus, a part of the line interface unit and interposed between reader 10 and switch 22.

Control of switch 22 is effected via signaling on ports 25 and 30, and/or reader 10. More specifically, controller 23 is responsive to the signals arriving from ports 25 and 30, and arriving from reader interface unit 24. The state of switch 22 is dictated by the control signals detected by controller 23 from reader 10 and from ports 25 and 30.

In an analog environment, the primary signal conversion need is the need to convert the digital signals developed by the card reader into analog form and, conversely, to convert analog signals destined to the reader into digital format. That, of course, is the modem function. Accordingly, in an analog environment, reader interface unit 24 is merely a conventional modem. Also, in an analog environment, switch 22 is not required for proper operation of the FIG. 1 apparatus because low level analog noise signals emanating from port 30 can be ignored in a properly designed reader 10. That is, in a "poor man" embodiment of this invention it is possible to do without switch 22, and merely instruct the user to not speak during data transmission to and from reader 10. Of course, it is beneficial to include a switch 22 and a switch controller 23 so that the signals of port 30 can be blocks when appropriate.

In operation, reader 10 communicates data and control information in a full duplex mode from the smartcard to the modem (24), and vice versa. The modem communicates information from the smartcard reader to switch 22, and vice versa. The line interface unit communicates data information between reader 10 and port 25, or communicates user signals (e.g., voice) between port 25 and port 30.

Switch 22 effects this function under influence of controller 23. Controller 23 may be connected to port 25, to reader 10, to port 30, or to any combination of the above, as chosen by a designer. The FIG. 1 embodiment shows a connection of all three (ports 25 and 30 and reader 10) to controller 23. Controller 23 can control switch 22 in myriad ways. One way, for example, is to give ultimate control to port 30. The user, who is connected to the FIG. 1 apparatus via a telephone coupled to port 30, can then have ultimate control over the operation of the FIG. 1 apparatus. Such control is effected, for example, through the touch-tone pad at the user's telephone instrument. Alternatively, ultimate control can be given to port 25, so that whenever the apparatus that is connected to port 25 via the telephone network wishes to request digital information from reader 10, or to send digital information to reader 10, it can do so regardless of whether or not the user is engaged in a conversation with the called party (or with a nearby listener who is not really part of the telephone connection). Ultimate control can be granted to port 25 simply by including a means, connected to port 25, for detecting a carrier signal. Such means may comprise conventional circuits for "carrier detect", which are found in all dial modems. When a carrier is detected, the connection between ports 25 and 30 is disabled, and the telephone at port 30 is effectively muted. Of course, control can also be established by the signals arriving from reader 10, in a manner not unlike the manner control is granted to port 25. In the context of the above, ultimate control by a port means that the port can relinquish control to other ports, or signals, but, at any time, that port can reassert control.

It may be noted that whereas switch 22 is depicted above as a single pole-double throw switch that connects port 25 to either port 30 or to reader 10, that need not be the case. It is very easy to employ a switch 22 that also permits port 30 to be connected to reader 10, or even a slightly more complex switch that connects port 25 to a "hold" circuit 25 when port 30 is connected to reader 10. That is, the user may desire to connect the port 30 telephone instrument to reader 10, and then establish a connection with the telephone network at port 25, or the user may desire to connect the port 30 instrument to reader 10 at some time after the connection with the telephone network. In the former case, port 25 can be left idle, whereas in the latter case port 25 must be terminated properly if the connection to the telephone network is not to be dropped. To that end, FIG. 1 shows terminating circuit 26 connected to switch 22.

The above presentation disclosed various ways in which ports 25 and 30, and reader 10 can have ultimate control over the state of switch 22 (via controller 23). It should be understood, however, that such control does not have to be constant or overarching and, indeed, it is quite possible to design controller 23 so that no port has "ultimate" control. Simply stated, controller 23 can be a conventional "state machine" that is responsive to all of its inputs and that is also sensitive to past inputs.

It is interesting to note that the combination realized with a conventional telephone coupled to the FIG. 1 adjunct results, effectively, is a very "smart" phone, because the smartcard imparts all of its capabilities to the combination. Many advantages can result from such a combination, including, for example, a very beneficial wireless phone (e.g., a cellular phone). All that is required to create a wireless phone is an rf receiver and transmitter section that is coupled to port 25. This is depicted in FIG. 2. The advantage of the FIG. 2 wireless phone is that all personalized information is contained in the smartcard, and not in the phone. That means that a user can pick-up any telephone arrangement that includes the adjuncts (of course, the functions of a conventional telephone can be incorporated in the FIG. 1 apparatus, yielding a phone with a smartcard reader) and convert it to uniquely personal cellular telephone simply by inserting the user's smartcard into it. This benefit, by the way, accrues to the FIG. 1 arrangements as well.

To further enhance operation of the FIG. 1 apparatus, it is useful to include a display means. The intent is to display some of the information that is entered into, or that is delivered, by reader 10. To that end, a display may be connected to switch 22 to allow data that flows to and from reader 22 to be captured at appropriate times and be displayed.

To still further enhance operation of the FIG. 1 apparatus, a microcomputer can be incorporated in the arrangement to perform various "smart phone" functions. The microcomputer, comprising a microprocessor and associated memory, may advantageously also be connected to switch 22. One such function may be "speed calling", where directory data is stored in the microprocessor's memory and that data is accessed via an application program that is initiated by the telephone instrument. Another application may be a set of services, such as call forwarding, distinctive ringing, three way calling, etc.

Yet another enhancement to the operation of the FIG. 1 apparatus is attained by including a keyboard. A conventional touch-tone telephone provides limited capability for the user to supply character information to either reader 10 or to port 25. In some applications it may be very useful to include a keyboard, and that keyboard may constitute a secondary input means, over and above the user's touch-tone pad. It would be advantageous to connect the keyboard to switch 22 to allow connection flexibility (though not a must).

In some anticipated applications of smartcards, a user will be requesting service from a representative of a service provider. The service provider may wish to authenticate not only the user but also the identity of the representative (such as when the representative is a traveling salesperson). To that end, it may be useful to have an adjunct that includes two smartcard readers. With two readers, it is possible to arrange for the service to be provided only when the information read from both readers is correct. The second reader may be incorporated into the structure of the adjunct, or it may be connected through, a separate port, in the same manner that reader 10 is connected to the line interface unit of FIG. 1.

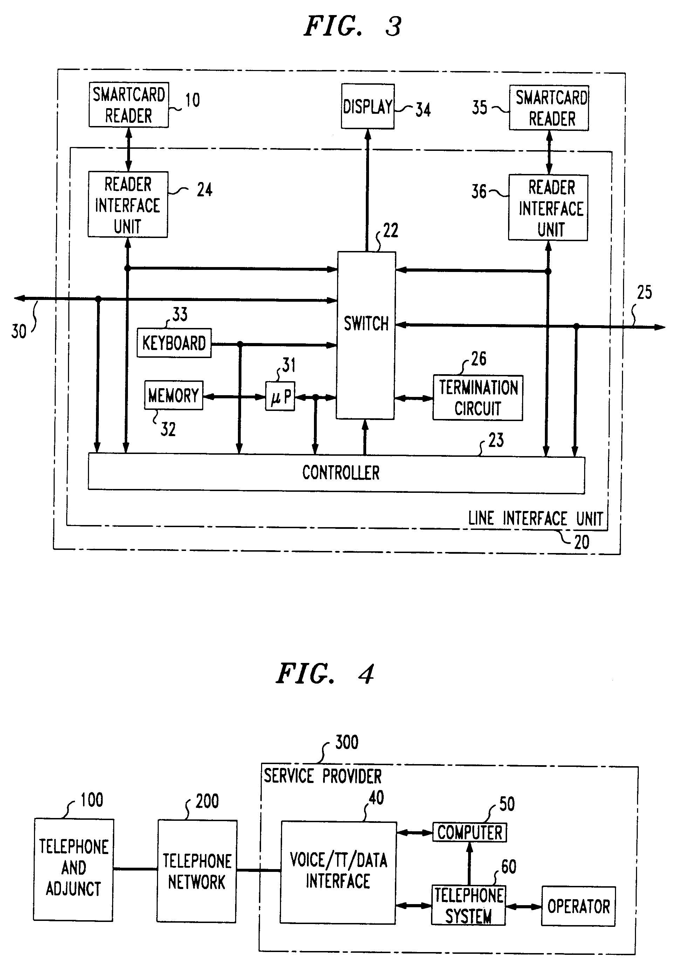

An arrangement that includes all of the above enhancements is depicted in FIG. 3. It should be understood, of course, that any particular embodiment employing the principles of this invention need not use all of those enhancements. Any combination can be employed.

In FIG. 3, microprocessor 31 is connected to switch 22 and to ports 25 and 30. Memory 32 is connected to microprocessor 31. Keyboard 33 is connected to switch 22, display means 34 is connected to switch 22, and reader 35 is connected to switch 22 via reader interface unit 36. All of those elements are also connected to controller 23, allowing switch 22 to effect whatever connection patterns the designer wishes to implement.

Switch 22 for the FIG. 3 embodiments can be an electronic crossbar switch, but it doesn't need to be a "full access" switch because certain connections are not likely to be ever used. For example, no element other than port 25 will ever be connected to termination circuit 26.

One application of this invention is a means for interfacing remotely with a service provider. Such an arrangement is depicted in FIG. 4, where the telephone adjunct arrangement described in connection with FIGS. 1-3 is represented by block 100. Block 100 is connected through telephone network 200 to service provider 300. Service provider 300 comprises a voice/touch-tone/data interface unit 40 which is interposed between telephone network 200 and elements 50 and 60. Element 50 is a conventional computer and element 60 is a telephone system, such as a PBX or an Automatic Call Distributor (ACD), that is able to communicate with interface 40 and computer 50.

Voice/touch-tone/data interface 40 is a system for accepting information from network 200 in either of the three formats (voice, touch-tone signals, or data signals) and is robust enough to interpret those signals and pass them along to either computer 50 or telephone system 60, as the information content of the signals requires. Such capability is found in the AT&T CONVERSANT® (registered trademark of AT&T) Voice Information System.

Basically, interface 40 may simply comprise a router. It accepts signals in one of the three formats and directs those signals to the appropriate outputs based on specified criteria. For example, in its simplest form, interface 40 may include circuitry that differentiates between voice signals, modem signal data and touch-tone data. Such a capability is easily achievable with conventional circuitry. The circuitry must only be sensitive to whether the signal is touch-tone or a modulated modem signal. All such circuits are available in the industry. Signals which are neither touch-tone nor modem can be concluded to be voice signals.

Having decided that the signal is a modem data signal, subsequent conventional circuitry can develop the digital signal contained therein and apply it to computer 50. Similarly, having determined that the signal is a voice signal, the routing circuitry can direct the signal to telephone system 60. With touch-tone data, the router can capture the signal, decode it, determine from the contents of the signal whether it is intended for computer 50 or telephone system 60, and route it accordingly.

Telephone system 60, as indicated above, can be an ACD, which in turn is connected to service agents.

In operation, communication may arrive from element 100 via touch-tone and voice signals, and connected to telephone system 60. The service agents connected to system 60 can then converse with the user coupled to element 100 and ascertain the desired service. Having so ascertained, the service agent can control computer 50 to begin an application program and also control element 100 through appropriate signals sent by system 60 through interface 40 and network 200 to element 100.

It is also possible for element 100 to access service provider 300 and be routed directly to computer 50. There the application program is initiated by actions of the user coupled to element 100.

The AT&T CONVERSANT® Voice Information System equipped with ASR (Automatic Speech Recognition) and T-T-S (Text-to-Speech) is also capable of creating computer generated voice responses. Some such systems create the voice responses that correspond to pre-recorded messages and others generated voice from text, "on-the-fly".

Also, the CONVERSANT® Voice Information System equipped with ASR (Automatic Speech Recognition) and T-T-S (Text-to-Speech) has the ability to recognize speech by recognizing certain words in the stream of spoken words and respond accordingly. These capabilities are beneficial to the system provider of FIG. 4 but, as indicated above, they are not necessary to the principles of this invention as depicted in FIG. 4.

## Claims

1. Apparatus comprising:
a line interface controller;
a first port connected to the line interface controller and adapted for communicating with a telephone network;
a second port coupled to the line interface controller and adapted for connecting with a telephone network; and
a smartcard reader coupled to the line interface controller.

2. The apparatus of claim 1 wherein the line interface controller comprises a switch that communicates signals between the first port and the second port or communicates signals between the first port and the reader in accordance with an applied control signal emanating from a control detection circuit added to the apparatus of claim 1.

3. The apparatus of claim 2 further including a modem interposed between the reader and the line interface controller.

4. The apparatus of claim 2 wherein the control detection circuit comprises means for detecting the presence of signals destined to, or flowing from, the reader.

5. The apparatus of claim 1 further comprising display means.

6. The apparatus of claim 2 wherein the line interface controller includes means for coupling a third port to the line interface controller, and said control detection circuit is further responsive to signals emanating from said third port.

7. The apparatus of claim 1 wherein the line interface controller comprises a microprocessor and a buffer coupled to said microprocessor.

8. The apparatus of claim 1 further comprising rf means coupled to the first port to emulate a wireless telephone.

9. The apparatus of claim 1 further comprising
a service provider complex, and
means for connecting the first port to the service provider complex.

10. The apparatus of claim 9 wherein the service provide complex comprises:
signal generation means for directing the line interface controller to allow communication by the reader or the second port, inclusively, with the service provider complex.
